# EUROPÄISCHE PATENTSCHRIFT

(11) **EP 0 658 417 B1**
(45) Veröffentlichungstag und Bekanntmachung des Hinweises auf die Patenterteilung: **03.11.1999**
(21) Anmeldenummer: 94119277.5
(22) Anmeldetag: 07.12.1994
(51) Int. Cl.: B29C 63/30, B32B 1/10, B32B 3/18, B32B 15/06

(54) **Verfahren zum korrosionsbeständigen Auskleiden eines Bauteiles aus Metall**
Method for corrosion resistant lining of a metal article
Procédé pour revêtir un article métallique avec une couche anticorrosive

(30) Priorität: 19.12.1993 DE 4343297
(43) Veröffentlichungstag der Anmeldung: 21.06.1995
(73) Patentinhaber: Keramchemie GmbH, D-56427 Siershahn (DE)
(72) Erfinder: Velte, Dieter, Dipl.-Ing., D-56235 Ransbach-Baumbach (DE)
(74) Vertreter: Kossobutzki, Walter, Dipl.-Ing.(FH)

(56) Entgegenhaltungen:
- EP-A- 0 233 374
- EP-A- 0 419 744
- DE-A- 2 506 912
- DE-A- 3 611 652
- DE-A- 3 905 395
- US-A- 3 054 523
- US-A- 3 232 812
- US-A- 3 367 075
- US-A- 4 505 971
- US-A- 5 301 719
- STAHL UND EISEN, Bd. 104, Nr. 5, 5.März 1984 DUSSELDORF DE, Seiten 245-248, ERICH ÖLKE, ROBERT HEINRICHS UND ECKHARD SCHACHT 'Korrosionsschutz von Stahlbauteilen durch Gummierung'
- PATENT ABSTRACTS OF JAPAN vol. 14 no. 300 (M-991) ,28.Juni 1990 & JP-A-02 097778 (TOMOE GIJUTSU KENKYUSHO : KK) 10.April 1990,
- PATENT ABSTRACTS OF JAPAN vol. 13 no. 510 (C-654) ,15.November 1989 & JP-A-01 204986 (BRIDGESTONE CORP) 17.August 1989,

## Beschreibung

Die Erfindung bezieht sich auf ein Verfahren zum korrosionsbeständigen Auskleiden eines aus Metall, insbesondere Stahl, bestehenden Bauteiles wie Behälter, Rohrleitung oder dgl., bei dem auf die nutzungsseitige Oberfläche des Bauteiles eine Schicht aus Gummi aufgebracht und anschließend auf dieser Schicht eine Deckschicht aus thermoplastischen Folien aufgeklebt wird.

In Rauchgasreinigungsanlagen, insbesondere Rauchgasentschwefelungsanlagen, werden korrosionsbeständige Bauteile, wie Behälter, Rohrleitungen und dgl. eingesetzt, die zunächst aus einem aus Stahl gefertigten Tragkörper bestehen. Um diesen aus Stahl gefertigten Tragkörper nun vor Korrosion zu schützen, wird der aus Stahl bestehende Tragkörper an seiner nutzungsseitigen Fläche mit einer ein- oder mehrschichtigen Gummischicht versehen, die aus Weichgummi auf der Basis von Butylkautschuk, Chlorbutylkautschuk oder Brombutylkautschuk besteht, wobei weitere Kautschuke, wie Polychloropren, Acrylnitrilbutadienkautschuk oder Styrol-Butadlenkautschuk zugegen sein können. Diese Gummischicht wird in Form von Gummibahnen, die eine Dicke von 2 mm - 5 mm aufweisen können, aufgebracht, wobei die Gummibahnen entweder bereits vorvulkanisiert sind oder nach ihrem Aufbringen vulkanisiert werden. Es ist auch üblich, zwei Gummibahnen übereinander auf den Tragkörper aufzubringen. Diese Gummischicht schützt das aus Stahl bestehende Bauteil gegen die aggressiven Rauchgase, die Schwefeldioxid, Chlorwasserstoff, Fluorwasserstoff und ähnliches enthalten können. Diese Gummischicht schützt darüber hinaus aber auch das aus Stahl bestehende Bauteil gegen die abrasiven Feststoffe, die in der Absorberflüssigkeit enthalten sind. Ein Nachteil der Gummischicht wird darin gesehen, daß dieselbe Wasser aus der Absorberflüssigkeit aufnehmen kann, welches nach einer gewissen Betriebszeit durch die Gummischicht diffundiert und sich an der Oberfläche des aus Stahl bestehenden Bauteiles ansammeln kann. Zusammen mit Sauerstoff sowie diffundierenden Salzen und sauren Gasen kann das Wasser dann zu einer Korrosion des Bauteiles führen. In den Bereichen, in denen wasserdampfhaltige bzw. wasserdampfgesättigte Gase auf die Gummischicht einwirken, ist die Medienaufnahme, vor allem die Wasserdampfaufnahme, wegen des hohen Wasserdampfpartialdruckes relativ hoch. Als Folge dieser Medienaufnahme tritt eine Quellung der Gummischicht ein.

Aus der DE-PS 25 06 912 ist ein Verfahren zum korrosionsfesten Auskleiden eines großen Stahlbehälters bekannt, der zur Aufnahme von der Industrie anfallenden, aggressiven Medien dient. Dabei müssen auch diese Behälter so ausgeführt sein, daß eine Zerstörung derselben durch chemische bzw. chemisch-thermische Angriffe nicht auftreten kann. Dazu wird zunächst auf die metallisch blanke Innenwand des Stahlbehälters eine fugenlose Gummischicht aufgebracht, auf deren Behälterinnenseite eine weitere korrosionsfeste Schicht aus einer verschweißbaren, thermoplastischen Folie mittels eines entsprechend korrosionsfesten Klebstoffes aufgeklebt und ihren Stoßkanten verschweißt wird. Die Dicke dieser korrosionsfesten thermoplastischen Schicht beträgt etwa 0,5 mm bis 4 mm, vorzugsweise 1,0 mm bis 2,0 mm. Als geeigneter, thermoplastischer Kunststoff wird Polypropylen vorgeschlagen. Polypropylen hat jedoch den Nachteil, daß es ohne besondere Vorbehandlung schlecht aufklebbar ist und daß es im Handel mit oxidierter oder chemisch geätzter Oberfläche nicht erhältlich ist. Darüber hinaus besteht die große Gefahr, daß beim Verschweißen der thermoplastischen Folie an den Stoßkanten Blasen entstehen können, die die Qualität der Auskleidung beeinträchtigen oder dieselbe sogar unbrauchbar machen.

Aus der US-PS 3 054 523 ist es bekannt, einen aus Stahl bestehenden Lagerbehälter durch eine äußere Verkleidung gegen Witterungseinflüsse zu schützen. Zusätzlich soll durch diesen äußeren Korrosionsschutz auch eine Erwärmung des Lagerbehälters durch Sonneneinstrahlung vermieden werden. Zu diesem Zweck wird die Beschichtung mit einer hochwärmereflektierenden Metallfolie, die normalerweise aus Aluminium besteht, abgedeckt. Anstelle der Aluminiumfolie kann auch eine Folie aus einem synthetischen, organischen Harz, beispielsweise PVC oder Copolymeren von Vinylchlorid und Vinylidenchlorid eingesetzt werden, wobei jedoch dann die wärmereflektierenden Eigenschaften einer solchen Folie verhältnismäßig gering sind. Alternativ dazu kann auch ein Laminat aus einer Metallfolie und einem Harzfilm verwendet werden. Die eigentliche Beschichtung des Lagerbehälters besteht aus einer Lösung eines nicht näher beschriebenen Kautschuks in Vinylmonomeren und Hexan als inertes Lösemittel sowie Kobaldnaphthenat.

Der Erfindung liegt deshalb die Aufgabe zugrunde, das aus der DE-PS 25 06 912 bekannte Verfahren dahingehend zu verbessern, daß die thermoplastischen Folien problemlos auf die Gummischicht aufgeklebt werden können und die Bildung von Blasen vermieden wird.

Zur Lösung dieser Aufgabe wird gemäß der Erfindung bei einem Verfahren der eingangs beschriebenen Gattung vorgeschlagen, daß die thermoplastischen Folien aus 0,1 mm - 1,0 mm dicken, klebseitig geätzten Folien aus Polytetrafluorethylen mit einer Kantenlänge von max. 3000 mm bestehen, die mittels eines Kontaktklebstoffes auf der Basis von Polychloropren/Polyisocyanat unter Ausbildung von Dehnungsfugen auf die Schicht aus Gummi aufgeklebtwerden, wobei die Dehnungsfugen mit einer Fugenmasse ausgefüllt werden.

Bei einem nach diesem Verfahren hergestellten, korrosionsbeständigen Bauteil aus Stahl wurde überraschend festgestellt, daß durch die thermoplastische Folie aus einem Fluorthermoplast die Wasseraufnahme der Gummischicht erheblich reduziert werden kann. Die Ausbildung von Dehnungsfugen stellt sicher, daß die bisher durch den Schweißvorgang hervorgerufene Blasenbildung vermieden wird. Bedarfsweise können die gebildeten Dehnungsfugen mit einer Fugenmasse ausgefüllt werden.

Weitere bevorzugte Merkmale eines Verfahrens gemäß der Erfindung sind in den Ansprüchen 2 und 3 offenbart.

Die Erfindung wird nachfolgend anhand eines in einer Zeichnung dargestellten Ausführungsbeispieles näher erläutert.

In dieser Zeichnung ist von einem korrosionsbeständigem Bauteil 1, beispielsweise einem Behälter nur ein Ausschnitt aus dessen Wandung gezeigt. Dabei besteht das Bauteil 1 zunächst aus einem aus Stahl gefertigten Tragkörper 2, dessen nutzungsseitige Oberfläche 3 zunächst durch Strahlen mit mineralischen Strahlmitteln oder Stahlkorn von Rost befreit wurde. Auf diese vorbereitete Oberfläche wird nun eine Grundierungsschicht 4 auf der Basis von chlorhaltigen Polymeren und Phenolharz aufgebracht, die eine Dicke von etwa 0,05 mm aufweist. Im Anschluß daran wird auf die Grundierungsschicht 4 eine Schicht 5 eines Kontaktklebstoffes in einer Dicke von etwa 0,08 mm aufgetragen, wobei dieser Kontaktklebstoff auf der Basis von Polychloropren/Polyisocyanat besteht.

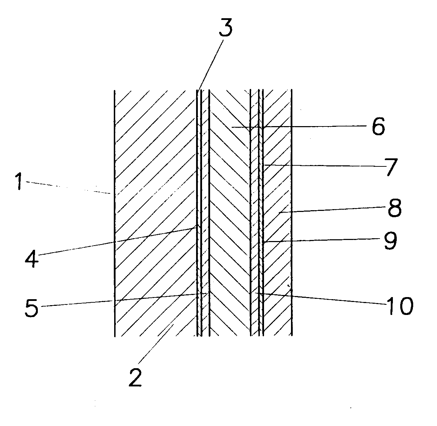

Auf eine vulkanisierte Butylkautschukbahn 6, die eine Dicke von etwa 4 mm besitzt, wird nun auf einer Seite ebenfalls eine Schicht aus dem gleichen Kontaktklebstoff aufgetragen, die jedoch in der Zeichnung nicht dargestellt ist. Sobald beide Schichten des Kontaktklebstoffes angetrocknet sind, wird die Butylkautschukbahn 6 mit ihrer Klebstoffschicht auf die Klebstoffschicht 5 aufgelegt und mit Hilfe einer Andrückrolle fest auf den Untergrund aufgepreßt.

Auf die geätzte Seite 7 einer etwa 0,4 mm dicken, handelsüblichen Folienbahn 8 aus Polytetrafluorethylen wird eine etwa 0,05 mm dicke Grundierschicht 9 auf der Basis chlorhaltiger Polymerer und Phenolharz aufgebracht und anschließend auf diese Grundierschicht 9 eine Schicht 10 auf einem Kontaktklebstoff in einer Dicke von etwa 0,08 mm aufgestrichen. Dabei besteht der Kontaktklebstoff auf der Basis von Polychloropren/Polyisocyanat. Auch auf die freie Fläche der Gummischicht 6 wird eine solche Schicht aus Kontaktklebstoff aufgetragen, die ebenfalls eine Dicke von etwa 0,08 mm besitzt und die in der Zeichnung nicht dargestellt ist. Nach einer kurzen Trockenzeit der Schichten aus Kontaktklebstoff wird die Folienbahn 8 mit ihrer Schicht 10 aus Kontaktklebstoff auf die Schicht aus Gummi bzw. auf die Gummibahn 6 aufgelegt und angepreßt. Nach einer Aushärtung der Klebstoffschicht, die bei Umgebungstemperatur mehrere Tage betragen kann, ist das Bauteil 1 bzw. dessen korrosionsbeständige Auskleidung belastbar.

Ein Probestück aus der Wandung eines derartigen, korrosionsbeständigen Bauteiles 1 wurde nun auf der Seite der Schicht 8 aus Polytetrafluorethylen wasserdampfgesättigter Luft von etwa 70°C während des Zeitraumes von einem Jahr ausgesetzt. Die Rück- bzw. Außenseite des aus Stahl bestehenden Tragkörpers 2 wurde dabei auf einer Temperatur von etwa 30°C gehalten. Nach dieser Zeit wurde der Wassergehalt in der Gummischicht 6 ermittelt, der etwa 1,8 Gewichtsprozent betrug. Ein gleiches Bauteil 1, dessen Gummischicht 6 nicht durch eine Schicht 8 aus Polytetrafluorethylen abgedeckt ist, weist unter den gleichen Bedingungen einen Wassergehalt von fast 9,0 Gewichtsprozent auf.

In Abänderung des dargestellten Ausführungsbeispieles ist es möglich, auf die geätzte Seite der Polytetrafluorethylenfolie 8 eine etwa 2,0 mm bis 4,0 mm dicke Weichgummischicht aufzuvulkanisieren und die so entstandende Verbundfolie mit Hilfe des oben beschriebenen Kontaktklebstoffes auf die Gummischicht 6 aufzukleben, wobei sich die Polytetrafluorethylenfolie 8 außen befindet.

Ferner ist es möglich, auf die gestrahlte Oberfläche 3 des Tragkörpers 2 mit Hilfe der Grundierungsschicht 4 und einer Klebstoffschicht 5 auf Basis von Brombutylkautschuk eine etwa 4,0 mm dicke, unvulkanisierte Gummischicht 6 auf der Basis von Brombutylkautschuk aufzukleben und auf diese dann, wie im ersten Beispiel beschrieben, die geätzte Polytetrafluorethylenfolie 8 aufzubringen.

Die beim Aufbringen der Folienbahnen 8 entstehenden Fugen - die Polytetraethylenfolien weisen vorzugsweise eine Größe von 1,0 m bis 1,5 m x 1,0 m bis 3,0 m auf - werden mit einer weichen Fugenmasse, z.B. auf der Basis von Butylkautschuk, hydroxyfunktionellem Polybutadien/Polyisocyanat, ausgefüllt. Die Glasübergangstemperatur der Fugenmasse liegt unterhalb 20°C.

## Patentansprüche

1. Verfahren zum korrosionsbeständigen Auskleiden eines aus Metall, insbesondere Stahl, bestehenden Bauteiles wie Behälter, Rohrleitung oder dgl., bei dem auf die nutzungsseitige Oberfläche des Bauteiles eine Schicht aus Gummi aufgebracht und anschließend auf dieser Schicht eine Deckschicht aus thermoplastischen Folien aufgeklebt wird,
dadurch gekennzeichnet,
daß die thermoplastischen Folien aus 0,1 mm - 1,0 mm dicken, klebseitig geätzten Folien aus Polytetrafluorethylen mit einer Kantenlänge von max. 3000 mm bestehen, die mittels eines Kontaktklebstoffes auf der Basis von polychloropren/Polyisocyanat unter Ausbildung von Dehnungsfugen auf die Schicht aus Gummi aufgeklebt werden, wobei die Dehnungsfugen mit einer Fugenmasse ausgefüllt werden.

2. Verfahren nach Anspruch 1,
dadurch gekennzeichnet,
daß die Folien aus Polytetrafluorethylen eine Dicke von 0,25 mm bis 0,50 mm aufweisen.

3. Verfahren nach Anspruch 2,
dadurch gekennzeichnet,
daß die Fugenmasse eine Glasübergangstemperatur von unter 20°C aufweist.

## Claims

1. Method for the corrosion-resistant lining of a component, such as a container, pipeline or the like, consisting of metal, in particular steel, in which a layer of rubber is applied to the working surface of the component and then an outer layer of thermoplastic films is glued on to this layer, characterised in that the thermoplastic films consist of 0.1 mm - 1.0 mm thick polytetrafluoroethylene films etched on the adhesive side with a maximum edge length of 3000 mm which are glued on to the layer of rubber by means of a contact adhesive based on polychloroprene/polyisocyanate, thereby forming expansion joints, the expansion joints being filled with a jointing filler.

2. Method according to claim 1, characterised in that the polytetrafluoroethylene films have a thickness of 0.25 mm to 0.50 mm.

3. Method according to claim 2, characterised in that the jointing filler has a glass transition temperature of less than 20°C.

## Revendications

1. Procédé de revêtement résistant à la corrosion d'un composant constitué de métal, en particulier d'acier, tel qu'un récipient, une tuyauterie ou les analogues, dans lequel on dépose sur la surface du côté utile du composant une couche de caoutchouc et ensuite on colle sur cette couche une couche de protection en feuilles thermoplastiques,
caractérisé en ce que,
les feuilles thermoplastiques sont constituées de polytétrafluoroéthylène de 0,1 mm - 1,0 mm d'épaisseur, attaquées chimiquement du côté à coller, avec une longueur de max. 3000 mm, qui sont collées au moyen d'une colle de contact à base de polychloroprène/polyisocyanate en formant des joints de dilatation sur la couche de caoutchouc, les joints de dilatation étant remplis par une matière de jointoiement.

2. Procédé selon la revendication 1,
caractérisé en ce que,
les feuilles de polytétrafluoroéthylène présentent une épaisseur de 0,25 mm à 0,50 mm.

3. Procédé selon la revendication 2,
caractérisé en ce que,
la matière de jointoiement présente une température de transltion vitreuse de moins de 20°C.
